# EUROPEAN PATENT APPLICATION

(11) **EP 4 576 331 A1**
(43) Date of publication of application: **25.06.2025**
(21) Application number: 24219622.8
(22) Date of filing: 12.12.2024
(51) Int. Cl.: H01M 10/613, H01M 10/6557, H01M 10/48, H01M 10/647, H01M 50/209, H01M 50/204, H01M 10/637, H01M 50/293

(54) **BATTERY ASSEMBLY AND CONTROLLING METHOD OF THE SAME**

(30) Priority: 20.12.2023 KR 20230187377
(71) Applicant: SK On Co., Ltd., Seoul 03161 (KR)
(72) Inventor: JANG, Sun Ho, 34124 Daejeon (KR)
(74) Representative: Prüfer & Partner mbB Patentanwälte · Rechtsanwälte

(57) **Abstract**

The present disclosure relates to a battery assembly including: a plurality of battery cells; an insertion member (300) positioned between the plurality of battery cells; an inlet (320) formed on one side of the insertion member; and a cover member (200) covering the plurality of battery cells and the insertion member, wherein the insertion member may expanded when a fluid is injected to the inside of the insertion member through the inlet.

## Description

### BACKGROUND OF THE INVENTION

### 1. Field

The present disclosure relates to a battery assembly and a controlling method of the same. Specifically, it relates to a battery assembly that delays or minimizes heat propagation and a controlling method of the same.

### 2. Description of the Related Art

A secondary battery is a battery that is made to convert electrical energy into chemical energy and store it so that it may be reused multiple times through charging and discharging, and to obtain the desired output and performance, a plurality of secondary batteries may be grouped and manufactured into a battery assembly.

However, there is a problem that, since secondary batteries have high energy density, when thermal runaway occurs, the temperature may rise rapidly, and so a fire may occur, and when thermal runaway or fire occurs in one secondary battery among a plurality of secondary batteries, heat may transferred to adjacent secondary batteries, so that thermal runaway may occur therein or a fire may spread rapidly.

### SUMMARY OF THE INVENTION

According to one aspect of the present disclosure, one object is to effectively and early suppress thermal runaway or fire that occurs during the operation of a battery cell.

According to another aspect of the present disclosure, another object is to place an insertion member capable of expanding and storing a fluid between battery cells to absorb heat generated from battery cells as much as possible.

According to still another aspect of the present disclosure, still another object is to form the insulation layer on one surface of the insertion member positioned between battery cells to minimize heat transfer between battery cells.

According to yet another aspect of the present disclosure, yet another object is to supply a fluid to the insertion member through the measurement results from a temperature sensor and a gas sensor to prevent unnecessary expansion of the insertion member.

According to yet another aspect of the present disclosure, yet another object is to allow the insertion member to expand so that no impact is applied to an adjacent battery cell.

According to yet another aspect of the present disclosure, yet another object is to allow the insertion member to be melted under specific conditions to bring the fluid to contact with an adjacent battery cell, thereby providing rapid suppression.

According to yet another aspect of the present disclosure, yet another object is to improve safety of a battery assembly including battery cells.

The battery assembly and the controlling method of the same of the present disclosure can be widely applied in the field of electric vehicles, battery charging stations, and green technology such as photovoltaics and wind power generation using batteries. In addition, the battery assembly and the controlling method of the same of the present disclosure can be used in eco-friendly electric vehicles and hybrid vehicles to prevent climate change by suppressing air pollution and greenhouse gas emissions.

A battery assembly according to the one embodiment of the present disclosure may include: a plurality of battery cells; an insertion member positioned between the plurality of battery cells; an inlet formed on one side of the insertion member; and a cover member covering the plurality of battery cells and the insertion member, wherein the insertion member may be expanded when a fluid is injected to the inside of the insertion member through the inlet.

The insertion member may include: an accommodating space, which is a space for accommodating the fluid therein; a first surface forming one surface of the accommodating space and contacting with any one battery cell among the plurality of battery cells; and a second surface that forms another surface of the accommodating space facing the first surface, spaced apart from another battery cell adjacent to the any one battery cell, and is contactable with the adjacent another battery cell when the insertion member is expanded.

The insertion member may further include an insulation layer facing the second surface in contact with the second surface.

The fluid, when injected through the inlet, may move the second surface toward the adjacent another battery cell to expand the insertion member.

The battery assembly may further include: a pump supplying the fluid to the insertion member; and a temperature sensor positioned inside the cover member and sensing the temperature of the plurality of battery cells.

The pump may move the fluid toward the insertion member, based on whether the temperature measured through the temperature sensor is higher than or equal to a predetermined allowable temperature.

The battery assembly may further include: a valve positioned on a pipe connecting the insertion member and the pump to open and close the pipe; and a gas sensor positioned inside the cover member and detecting a gas inside the cover member.

The valve may be opened and spray the fluid toward the plurality of battery cells through the pipe, based on whether a gas is detected inside the cover member through the gas sensor.

The fluid includes a cooling material.

The insertion member may be provided in a plural number, and the number of the plurality of insertion members may be less than or equal to the number of the plurality of battery cells.

The gas may include any one of hydrogen, carbon monoxide, and carbon dioxide or a combination thereof.

The accommodating space may begin to be melted above the allowable temperature so that the fluid is brought to contract with at least a part of the plurality of battery cells.

The temperature sensor may be provided in a plural member to be disposed to each of the plurality of battery cells, and the pump may move the fluid toward the insertion member when the temperature measured by at least one temperature sensor among the plurality of temperature sensors is higher than or equal to the predetermined allowable temperature.

The valve may be provided in a plural number between the pump and the plurality of insertion members so that the fluid is selectively supplied to the plurality of insertion members.

The inside of the cover member may be partitioned into a plurality of spaces, and temperature sensors may be disposed to correspond to the plurality of spaces so that the fluid is moved toward the insertion member through the pump when the temperature measured by a temperature sensor disposed in one space among the plurality of spaces is higher than or equal to the predetermined allowable temperature.

The valve may be disposed to correspond to the plurality of spaces so that the fluid is independently supplied to the plurality of spaces through opening and closing.

The insulation layer may be laminated on the second surface.

A controlling method of a battery assembly according to one embodiment of the present disclosure may be a controlling method of a battery assembly including battery cells; an insertion member positioned adjacently to the battery cells; an inlet formed on one side of the insertion member; and a cover member covering the battery cells and the insertion member, the controlling method including: sensing the temperature of the battery cells through a temperature sensor positioned inside the cover member; moving a fluid toward the insertion member through a pump supplying a fluid to the insertion member when the temperature sensed through the temperature sensor is higher than or equal to an allowable temperature; sensing a gas through a gas sensor positioned inside the cover member; and opening a valve positioned on a pipe connecting the insertion member and the pump and spraying the fluid toward the battery cells when the gas sensor senses the gas.

The controlling method may further include: when the temperature measured through the temperature sensor is lower than a predetermined allowable temperature, measuring the temperature of the battery cells again through the temperature sensor after a certain time.

The controlling method may further include: when the gas sensor fails to sense the gas, measuring the temperature of the battery cells again through the temperature sensor.

The controlling method may further include: after opening the valve, bringing the fluid to contact with battery cells other than the battery cell through the insertion member partially melted by the battery cell.

In the operation of sensing a gas through a gas sensor positioned inside the cover member, the gas may include any one of hydrogen, carbon monoxide, and carbon dioxide or a combination thereof.

According to one embodiment of the present disclosure, thermal runaway or fire that occurs during the operation of a battery cell can be effectively and early suppressed.

According to another embodiment of the present disclosure, an insertion member positioned between battery cells may be capable of expanding and storing a fluid to absorb heat generated from battery cells as much as possible.

According to still another embodiment of the present disclosure, the insulation layer may be formed on one surface of the insertion member positioned between battery cells to minimize heat transfer between battery cells.

According to yet another embodiment of the present disclosure, a fluid may be supplied to the insertion member through the measurement results from a temperature sensor and a gas sensor to prevent unnecessary expansion of the insertion member.

According to yet another embodiment of the present disclosure, the insertion member may be allowed to expand so that no impact is applied to an adjacent battery cell.

According to yet another embodiment of the present disclosure, the insertion member may be allowed to be melted under specific conditions to bring the fluid to contact with an adjacent battery cell, thereby providing rapid suppression.

According to yet another embodiment of the present disclosure, safety of a battery assembly including battery cells may be improved.

### BRIEF DESCRIPTION OF THE DRAWINGS

FIG. 1 shows a battery assembly according to one embodiment of the present disclosure.
FIG. 2 shows an exploded view of a battery assembly according to one embodiment of the present disclosure.
FIG. 3 shows a battery cell according to one embodiment of the present disclosure.
FIG. 4 shows a battery cell and an insertion member according to one embodiment of the present disclosure.
FIG. 5 shows a conceptual illustration of a flow of heat in a battery cell and an insertion member according to one embodiment of the present disclosure.
FIG. 6 shows an insertion member adjacent to a battery cell according to one embodiment of the present disclosure.
FIG. 7 shows expansion of an insertion member adjacent to a battery cell according to one embodiment of the present disclosure.
FIG. 8 shows a cross-section of an insertion member adjacent to a battery cell according to one embodiment of the present disclosure.
FIG. 9 shows a cross-section of an expanded insertion member adjacent to a battery cell according to one embodiment of the present disclosure.
FIG. 10 shows expansion of an insertion member between battery cells according to one embodiment of the present disclosure.
FIG. 11 shows a battery assembly and a fluid supply system according to one embodiment of the present disclosure.
FIG. 12 shows a battery assembly and a fluid supply system according to another embodiment of the present disclosure.
FIG. 13 show a flowchart illustrating a controlling method of a battery assembly according to one embodiment of the present disclosure.

### DETAILED DESCRIPTION

Hereinafter, the present disclosure will be described in detail with reference to the attached drawings. This is merely illustrative, and the present disclosure is not limited to the specific embodiments described in an illustrative manner.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, it will be described below based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for explanation so that the present disclosure may be clearly understood, and of course, the directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in this specification, singular expressions include plural expressions unless the context clearly dictates otherwise.

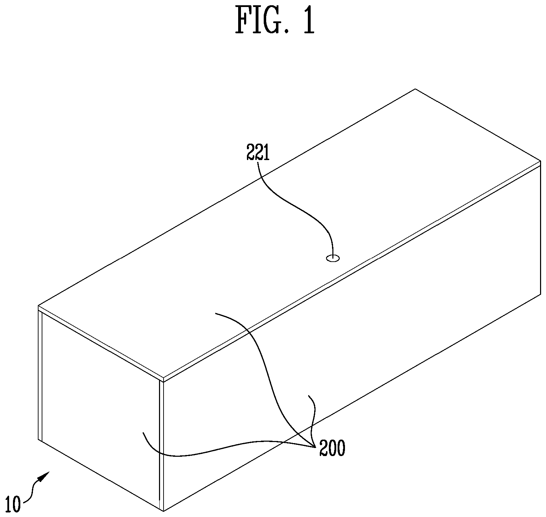

FIG. 1 shows a battery assembly according to one embodiment of the present disclosure.

Referring to FIG. 1, A battery assembly 10 according to the one embodiment of the present disclosure may include: a plurality of battery cells 100; an insertion member 300 positioned between the plurality of battery cells 100; an inlet 320 formed on one side of the insertion member 300; and a cover member 200 covering the plurality of battery cells 100 and the insertion member 300, wherein the insertion member 300 may be expanded when a fluid is injected to the inside of the insertion member 300 through the inlet 320.

Referring to FIG. 1, a battery assembly 10 of the present disclosure includes a plurality of battery cells 100. A battery cell 100 described in the present specification may include a secondary battery that can be repeatedly used by charging and discharging electrical energy. For example, it may mean a lithium secondary battery or a lithium ion battery, but it is not limited thereto.

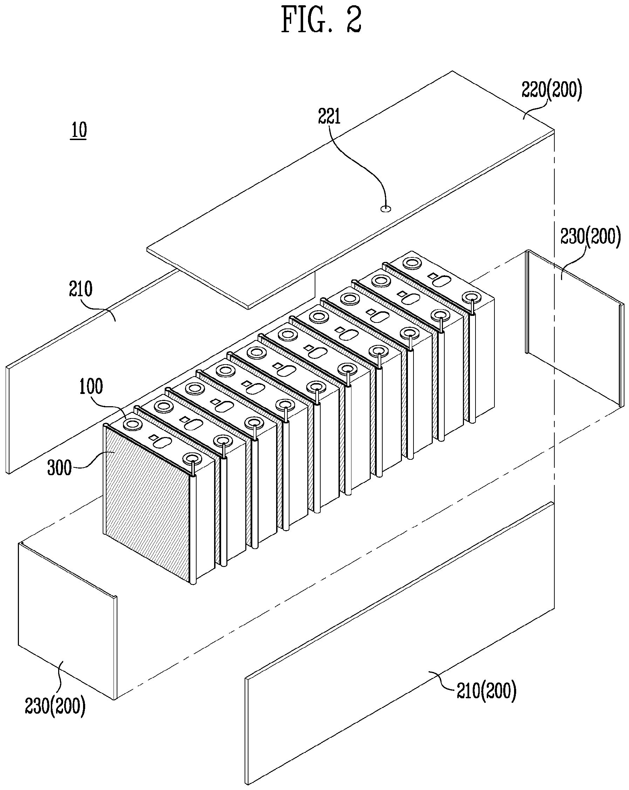

Battery cells 100 may be classified into pouch-type secondary batteries, prismatic secondary batteries, or cylindrical secondary batteries depending on their shape. Referring to FIG. 2, in the present specification, a prismatic secondary battery is illustrated as an example for convenience of explanation, but the present invention is not limited thereto.

Meanwhile, a battery assembly 10 described in the present specification may include a battery module or a battery pack in which one or more batteries 100 are grouped to protect the battery cells from external shock, heat, vibration, and the like and to have high output and high capacity characteristics.

Battery cells 100 may include a cathode and an anode. A cathode may include a cathode active material which lithium ions may be inserted into and extracted from. An anode may include an anode active material which lithium ions may be inserted into and extracted from. A battery cell 100 may further include a separator to prevent an electrical short circuit between a cathode and an anode and to generate a flow of ions, and as another example, it may include a solid-state battery.

Ultimately, the battery cell 100 of the present disclosure may store and supply electrical energy by including electrode assemblies stacked in various ways.

Referring to FIG. 1, the battery assembly 10 of the present disclosure may include a cover member 200 accommodating a plurality of battery cells 100, and the cover member 200 may accommodate battery cells 100 therein.

A cover member 200 may be formed to be in contact with at least one surface of a battery cell 100 to isolate the battery cell 100 from the outside. A cover member 200 may prevent damage to a battery cell 100 from external shock, heat, vibration, or pressure.

FIG. 2 shows an exploded view of a battery assembly according to one embodiment of the present disclosure.

Referring to FIG. 2, a cover member 200 may include a side cover 210 that supports side surfaces of a plurality of battery cells 100, a cap cover 220 that covers an upper surface of the plurality of battery cells 100, and an end cover 230 that is combined with the side cover 210 to cover a front surface and a rear surface of the plurality of battery cells 100.

A side cover 210 may be combined with a cap cover 220 on an upper surface and combined with an end cover 230 at a front surface and a rear surface to form an internal area, and a plurality of battery cells 100 may be disposed in the internal area.

An inner area is a space formed by being surrounded by a side cover 210, a cap cover 220, and an end cover 230, and since not all surfaces thereof are covered by a cover member 200, it may include one open surface.

Referring to FIG. 2, a plurality of battery cells 100 may be surrounded on the side surfaces, upper surface, front and rear surfaces by a side cover 210, a cap cover 220, and an end cover 230, but a lower surface may not be covered by a cover member 200.

A cover member 200 may prevent damage to a plurality of battery cells 100 by blocking or absorbing external shock, heat, vibration, or pressure that may be applied to the plurality of battery cells 100.

Therefore, when a part of a plurality of battery cells 100 may resist external shock or the like, a cover member 200 may be omitted, so that a part of a plurality of battery cells 100 may be exposed to the outside.

In FIG. 2, a cover member 200 is omitted on a lower surface of a plurality of battery cells 100, so that the lower surface is exposed to the outside. However, in other embodiments, a cover member 200 may be omitted on parts other than a lower surface of the cover member 200.

A cover member 200 may have different physical and chemical properties due to differences in material, thickness, or the like, depending on the position where it is placed with respect to a plurality of battery cells 100.

A part of a cover member 200 may be omitted or the material and thickness may be changed to have different physical and chemical properties depending on the shape and material of a plurality of battery cells 100 accommodated therein.

A cover member 200 may have different shapes depending on the types of battery cells 100 accommodated therein, such as pouch shape, prismatic shape, or cylindrical shape. In addition, a cover member 200 may have different shapes depending on the physical and chemical properties of battery cells 100 even when the battery cells 100 are of a same type.

In FIG. 2, a plurality of battery cells 100 are illustrated as having a prismatic shape, and a cover member 200 is omitted on a lower surface of the plurality of battery cells 100.

However, even when a plurality of battery cells 100 are formed in a prismatic shape, when the physical and chemical properties of a lower surface are insufficient, all surfaces of the plurality of battery cells 100 may be surrounded by a cover member 200.

A cover member 200 is not limited to what is illustrated in the drawings, and may vary depending on the properties of a plurality of battery cells 100 accommodated therein.

A cap cover 220 may include at least one connecting hole 221 that is open and allows a pipe to be inserted therethrough. A connecting hole 221 may serve as a passage connecting the inside and outside of a cover member 200 through a cap cover 220.

A connecting hole 221 may serve as a passage connecting an inlet 320 formed on one side of a battery cell 100 and a pump 410, and a pipe connecting the inlet 320 and the pump 410 may pass therethrough.

One or more connecting holes 221 may be provided depending on the position of a branch point where a pipe running from a pump 410 toward an inlet 320 is branched into several pipes.

When one connecting hole 221 is formed on a cap cover 220, a branch point of a pipe may be disposed inside a cover member 200 so that a plurality of branched pipes guide a fluid supplied from a pump 410 to an inlet 320.

A battery assembly 10 of the present disclosure may include a bus bar assembly (not shown). A bus bar assembly may electrically connect at least a part of a plurality of battery cells 100 and may be positioned outside the plurality of battery cells 100.

A bus bar assembly may be disposed adjacently to an electrode of a battery cell 100, and may be disposed on an upper surface of a plurality of battery cells 100 in FIG. 2. However, as long as a bus bar assembly may be connected to an electrode of a battery cell 100, the position of a plurality of battery cells 100 is not limited.

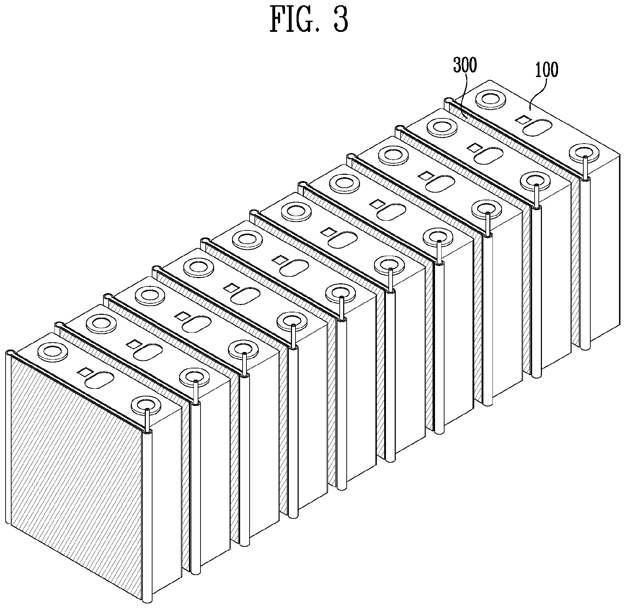

FIG. 3 shows a battery cell according to one embodiment of the present disclosure.

Referring to FIG. 3, a plurality of battery cells 100 provided inside a battery assembly 10 are separately illustrated, and the plurality of battery cells 100 may be stacked along a preset stacking direction.

A plurality of battery cells 100 may be arranged or stacked at regular intervals, so that the battery cells 100 may be spaced apart from each other. An insertion member 300 may be positioned between the battery cells 100 or between the battery cells 100 and a cover member 200, so that one surface thereof may in contact with the battery cell 100.

The insertion member 300 may include: an accommodating space, which is a space for accommodating the fluid therein; a first surface 301 forming one surface of the accommodating space and contacting with any one battery cell 100 among the plurality of battery cells 100; and a second surface 302 that forms another surface of the accommodating space facing the first surface 301, spaced apart from another battery cell 100 adjacent to the any one battery cell 100, and is contactable with the adjacent another battery cell 100 when the insertion member 300 is expanded.

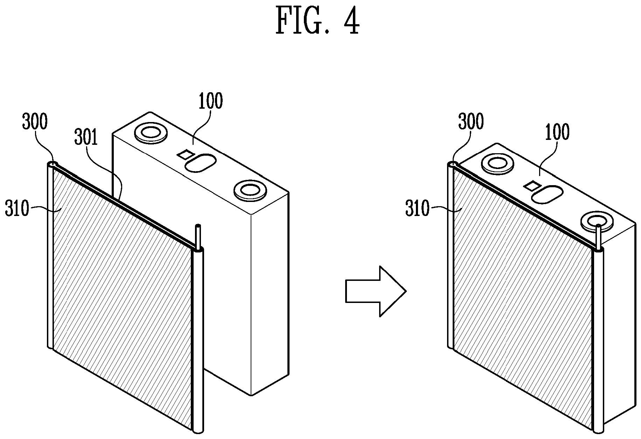

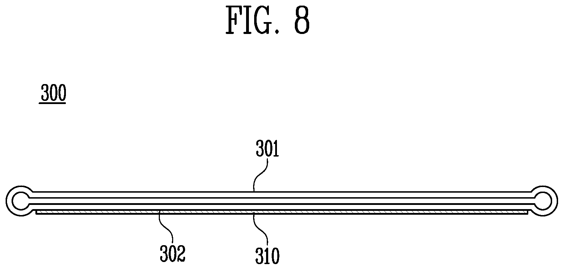

An insertion member 300 may include an inlet 320 formed on one side to accommodating a fluid from the outside, and it may include an accommodating space accommodating a fluid therein, a first surface 301 forming one surface of the accommodating space and an outer surface of the insertion member 300, and a second surface 302 forming another surface of the accommodating space and an outer surface of the insertion member 300. The first surface 301 and the second surface 302 are specifically indicated in FIG. 4 or FIG. 8.

An accommodating space (not shown) may be formed inside an insertion member 300 to accommodate a fluid flowing in through an inlet 320 formed on one side of the insertion member 300. The accommodating space is a space positioned between a first surface 301 and a second surface 302, and the volume or shape thereof may vary depending on the distance between the first surface 301 and the second surface 302.

An accommodating space may be a space formed inside an insertion member 300, and may be connected to an inlet 320 to store a fluid supplied through the inlet 320, and it may be an internal area formed by an outer surface of the insertion member 300.

Therefore, when a fluid is supplied to an insertion member 300 from the outside of a battery assembly 10 through a pipe and a pump 410 and the fluid flows into an accommodating space through an inlet 320 of the insertion member 300, the volume of the accommodating space may vary, which may hereinafter be described as being 'expanded.'

An accommodating space may have a certain volume even before the inflow of a fluid, and may be provided in a vacuum state or a state containing air. When a fluid flows into an accommodating space, the accommodating space may expand due to the volume of the fluid, and the heat capacity of an insertion member 300 including the accommodating space may vary depending on the type of fluid flowing into the accommodating space and the volume or mass of the introduced fluid.

A first surface 301 may correspond to a surface in contact with any one battery cell 100 among a plurality of battery cells 100 on one surface of an accommodating space, and a second surface 302 may be a surface that faces the first surface 301 and is in contact with a battery cell 100 adjacent to the any one battery cell 100.

In an insertion member 300, a first surface 301 is a surface that is in contact with a battery cell 100, but a second surface may be provided to be contactable with a battery cell 100 adjacent to the battery cell with which the first surface 301 is in contact, so that the second surface may be spaced apart from the battery cell 100.

A first surface 301 and a second surface may be spaced apart with an accommodating space therebetween, so that the distance between the first surface 301 and the second surface may correspond to the width of the accommodating space.

An insertion member 300 may include an insulation layer 310 that faces a second surface 302 and is in contact with the second surface 302, so that a first surface 301 may be in contact with a battery cell 100, and the second surface 302 may be in contact with the insulation layer 310.

FIG. 4 shows a battery cell and an insertion member according to one embodiment of the present disclosure.

FIG. 4 shows a process of bringing into contact or combining a battery cell 100 and an insertion member 300, and while a first surface 301 of the insertion member 300 is disposed to face a battery cell 100, the distance to the battery cell may be reduced so that they may be in contact with each other.

It is sufficient for a first surface 301 of an insertion member 300 to be in contact with a battery cell 100, and it is not limited to the case where the position of the first surface 301 is fixed to the battery cell 100 through an adhesive or the like.

An insertion member 300 may be provided with a thin thickness so as to be expandable and may be made of a metal, and it may include a foil in one embodiment. An insertion member 300 may include an outer surface made of a metal to absorb and store heat generated from a battery cell 100 or to easily discharge it, thereby lowering the temperature of the battery cell 100 in contact with a first surface 301.

An insertion member 300 may absorb the heat of a battery cell 100 and help store or discharge the absorbed heat, so the material used for the insertion member 300 is not limited to a metal but may include a material that transfers heat, other than a metal.

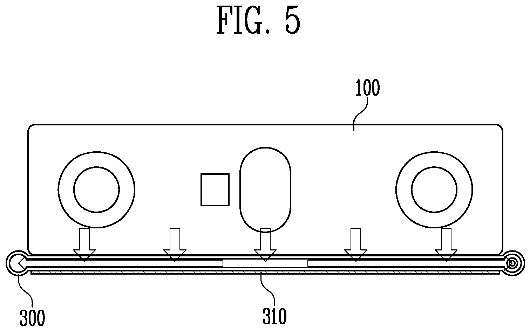

FIG. 5 shows a conceptual illustration of a flow of heat in a battery cell and an insertion member according to one embodiment of the present disclosure.

Referring to FIG. 5, an insertion member 300 may absorb heat generated from a battery cell 100 while in contact with the battery cell 100. A battery cell 100 generates heat under normal operating conditions, and when thermal runaway of a battery cell 100 progresses, a drastic temperature increase may occur within a short period of time, thereby causing a fire.

An insertion member 300 may lower the temperature of a battery cell 100 by absorbing the heat generated from the battery cell 100 through a first surface 301 in contact with the battery cell 100, and a second surface 302 may be provided with an insulation layer 310 to minimize the transfer of the absorbed heat to an adjacent battery cell 100.

The heat generated from a battery cell 100 may move to an insertion member 300 that is provided at a relatively low temperature, so that the insertion member 300 absorbs the heat, and the heat absorbed by the insertion member 300 may be discharged to both ends along the insertion member 300.

Both ends of an insertion member 300 may be provided in the form of a pillar protruding from a first surface 301 and a second surface 302 to both sides, so that the surface area may be relatively large. An inlet 320 may be provided at some of both ends of an insertion member 300 to serve as a passage through which a fluid is introduced.

When thermal runaway occurs in a battery cell 100 and excessive heat is generated, a fluid may be introduced to an accommodating space through an inlet 320 under certain conditions, and an insertion member 300 may expand due to the introduced fluid.

An insertion member 300 may play the roles of heat absorption and heat dissipation at the same time, because a first surface 301 serves as a heat absorber that absorbs heat from a battery cell 100, and a second surface 302, which is provided with an insulation layer 310 formed with an area corresponding to the second surface, serves as a heat protector that prevents heat from being transferred to an adjacent battery cell 100.

The fluid includes a cooling material.

The fluid may increase may include a cooling material to increase heat capacity of an insertion member 300, thereby helping a battery cell 100 maintain an appropriate temperature. When specific conditions are met, a fluid may be supplied to an insertion member 300, which will be described later.

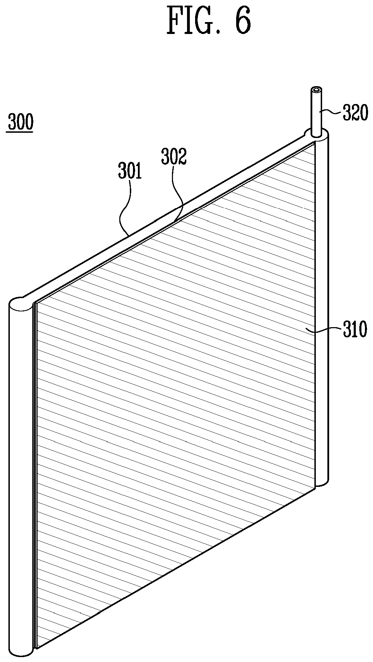

FIG. 6 shows an insertion member adjacent to a battery cell according to one embodiment of the present disclosure. FIG. 6 shows a state before a fluid is introduced to an insertion member 300 and a state before the fluid is stored in an accommodating space, which is a space formed between a first surface 301 and a second surface 302.

An insulation layer 310 may be disposed adjacently to a second surface 302, so that a first surface 301 and a second surface 302 may be distinguished in appearance. Transfer of the heat absorbed from a first surface 301 in the direction of a second surface 302 where an insulation layer 310 is provided may be minimized so that the heat may be transferred to one side where an inlet 320 is provided or to the other end, which is in the opposite direction.

Heat transferred from an insertion member 300 to one side may be cooled or its temperature may be reduced by a fluid introduced from an inlet 320.

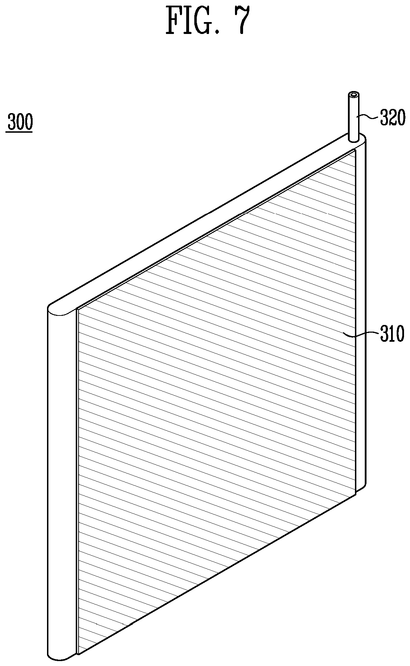

FIG. 7 shows expansion of an insertion member adjacent to a battery cell according to one embodiment of the present disclosure.

FIG. 7 shows a state in which a fluid is introduced to an insertion member 300 and a state in which the fluid is stored in an accommodating space, which is a space formed between a first surface 301 and a second surface 302, and the insertion member 300 is expanded.

In FIG. 7, a first surface 301 and a second surface 302 of an insertion member 300 may be spaced apart from each other so that the insertion member 300 may have a certain volume even before the introduction of a fluid. However, in another embodiment, the first surface 301 and the second surface 302 may be provided in a structure where they meet or are in contact with each other so that the volume of the insertion member 300 may be minimized.

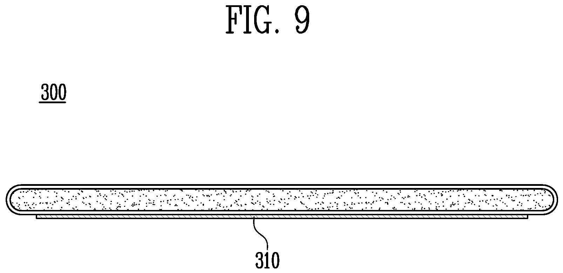

An insertion member 300 may include an outer surface provided in a thin thickness, so the volume may be expanded by a fluid introduced to the inside. As shown in FIG. 9, an insertion member 300 may accommodate a fluid when the distance between a first surface 301 and a second surface 302 increases.

A first surface 301 of an insertion member 300 may be in contact with a battery cell 100, and a second surface 302 may be disposed to face the first surface 301, so that the position of the first surface 301 is fixed with respect to the battery cell 100, and the second surface 302 may be formed to be movable with respect to the battery cell 100 with which the first surface 301 is in contact.

A fluid injected into an insertion member 300 through an inlet 320 causes a second surface 302 to move away from a battery cell 100 in contact with a first surface 301, thereby moving the second surface 302 toward a battery cell 100 adjacent to the battery cell 100 in contact with the first surface 301 to expand the insertion member 300.

FIG. 8 shows a cross-section of an insertion member adjacent to a battery cell according to one embodiment of the present disclosure.

FIG. 8 shows a state before a fluid is introduced into an insertion member 300 and a state before the fluid is stored in an accommodating space, which is a space formed between a first surface 301 and a second surface 302.

In FIG. 8, a first surface 301 and a second surface 302 are illustrated to be flat and disposed to face each other, but in other embodiments, the first surface 301 and the second surface 302 may be provided to form a curved surface or be disposed unevenly, such as embossing.

The insulation layer 310 may be laminated on a second surface 302, and the area of the insulation layer 310 may correspond to the area of the second surface 302, but is not limited thereto.

FIG. 9 shows a cross-section of an expanded insertion member adjacent to a battery cell according to one embodiment of the present disclosure.

FIG. 9 shows a state in which fluid flows into the insertion member 300, and the fluid is stored in the receiving space, which is a space formed between the first surface 301 and the second surface 302, and the insertion member 300 expands. It is in a state.

A fluid may be introduced to the interior of an insertion member 300 through an inlet 320 and may be stored in an accommodating space. When a fluid is injected into an accommodating space through an inlet 320, the distance between a first surface 301 and a second surface 302 may increase, and since the first surface 301 is provided adjacently to a battery cell 100 and thus the movement is limited, a second surface 302 may move away from the first surface 301.

Battery cells 100 may be stacked in a preset stacking direction, and a first surface 301 may be in contact with one battery cell 100, while a second surface 302 may face another battery cell adjacent to the one battery cell 100.

When a fluid is injected through an inlet 320, the fluid may move a second surface 302 toward another battery cell 100 adjacent to one battery cell 100 to expand an insertion member 300.

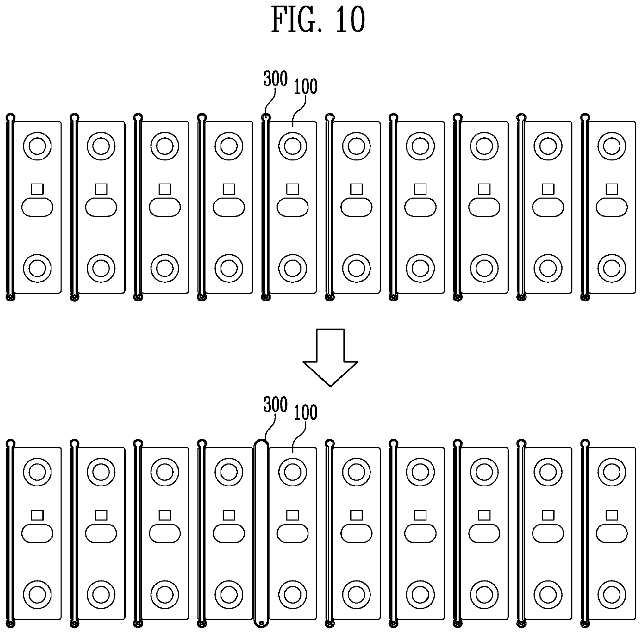

FIG. 10 shows expansion of an insertion member between battery cells according to one embodiment of the present disclosure.

FIG. 10 shows an embodiment in which insertion members 300 are disposed for a plurality of battery cells 100 stacked according to a preset stacking direction, and the insertion members 300 are disposed in a one-to-one correspondence with the plurality of battery cells 100.

The insertion member 300 may be provided in a plural number, and the number of the plurality of insertion members may be less than or equal to the number of the plurality of battery cells 100.

Each battery cell 100 is may be in contact with one insertion member 300, and when each battery cell 100 satisfies specific conditions, the insertion member 300 may receive a fluid to expand between battery cells 100.

This is for one embodiment, and in another embodiment, insertion members 300 may be provided in a number that does not correspond to the number of a plurality of battery cells 100, and even when the insertion members are provided in a plural number corresponding to the number of the plurality of battery cells 100, they may not be disposed in a one-to-one correspondence with the plurality of battery cells 100.

An insertion member 300 may have a first surface 301 in contact with a battery cell 100 and a second surface 302 provided with a heat insulation layer 310 to serve as a heat protecting structure that prevents heat generated in one battery cell 100 from being transferred to an adjacent battery cell 100, and when a fluid is injected to the insertion member 300, the heat capacity is increased so that it may further serve to control the temperature of a battery cells 100.

The accommodating space may begin to be melted above the allowable temperature so that the fluid is brought to contract with at least a part of the plurality of battery cells 100.

In another embodiment, when an insertion member 300 receives a lot of heat from a battery cell 100, a part of the insertion member 300 may begin to be melted, exposing the accommodating space to the outside.

This may be in a state where the battery cell 100 satisfies specific conditions of allowable temperature and gas detection and a fluid is supplied to an accommodating space of an insertion member 300, and as the accommodating space is melted, the fluid may be discharged or move from the inside of the insertion member 300 to an adjacent battery cell 100 so that at least a part of battery cells 100 among the plurality of battery cells 100 may be in contact with the fluid.

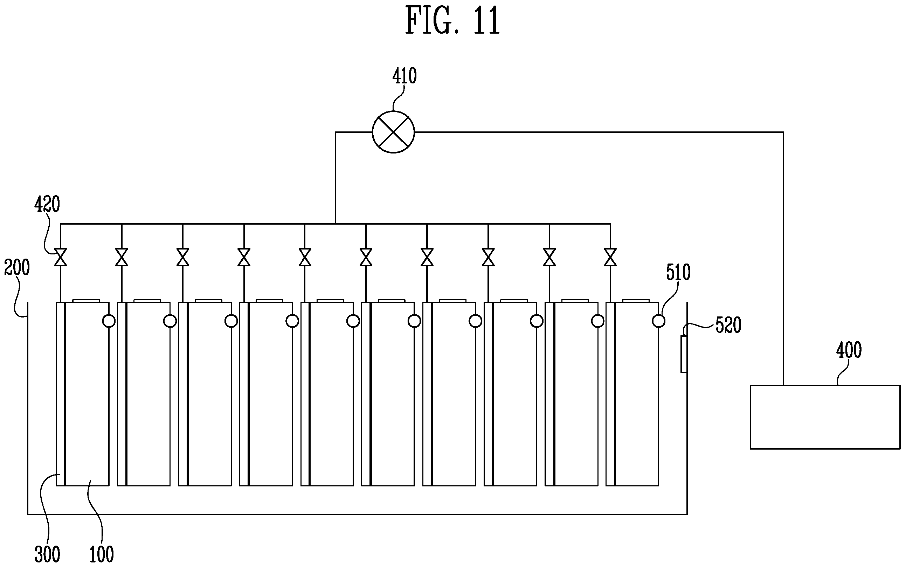

FIG. 11 shows a battery assembly and a fluid supply system according to one embodiment of the present disclosure.

FIG. 11 shows a diagram for explaining the process and system by which a fluid is supplied to an insertion member 300 in a plurality of battery cells 100 and insertion members 300 provided inside a cover member 200.

The battery assembly 10 may further include: a pump 410 supplying the fluid to the insertion member 300; and a temperature sensor 510 positioned inside the cover member 200 and sensing the temperature of the plurality of battery cells 100. The pump 410 may move the fluid toward the insertion member 300, based on whether the temperature measured through the temperature sensor 510 is higher than or equal to a predetermined allowable temperature.

The battery assembly 10 may further include: a valve 420 positioned on a pipe connecting the insertion member 300 and the pump 410 to open and close the pipe 410; and a gas sensor 520 positioned inside the cover member 200 and detecting a gas inside the cover member 200. The valve 420 may be opened and spray the fluid toward the plurality of battery cells 100 through the pipe, based on whether a gas is detected inside the cover member 200 through the gas sensor 520.

A fluid tank 400 in which fluid is stored, a pump 410, and a pipe may be provided outside a cover member 200, and a temperature sensor 510 and a gas sensor 520 adjacent to a battery cell 100 may be provided inside the cover member 200.

A fluid tank 400 may be provided at a position spaced apart from a battery assembly 10 and may be provided as a storage tank for storing a certain amount of fluid. A supply pump (not shown) may be provided inside the fluid tank 400 to supply a fluid to the pump 410 on a pipe, and the pipe extending from the fluid tank 400 may be connected to an insertion member 300.

A pipe may connect an inlet 320 of an insertion member 300 and a fluid tank 400 and thus may serve as a passage through which a fluid stored in the fluid tank 400 is supplied to the insertion member 300. One end of the pipe may be connected to the fluid tank 400, the other end may be connected to the inlet 320 of each insertion member 300, and the other end may be branched at a branch point, which is one position, to be connected to the inlet 320 of each insertion member 300.

A battery assembly 10 according to the present disclosure may include a pump 410 that supplies a fluid to an insertion member 300 and a valve 420 valve positioned on a pipe connecting the insertion member 300 and the pump 410 to open and close the pipe.

A battery assembly 10 may not only include a battery module or a battery pack, but may further include devices connected thereto.

A pump 410, which is a component for supplying a fluid to an insertion member 300, or a motor corresponding thereto may be additionally provided and included in a battery assembly 10.

A pump 410 or motor may be disposed outside a cover member 200 that covers a plurality of battery cells 100 and insertion members 300, and may be included in a battery assembly 10 together with the cover member 200.

Alternatively, the pump 410 or motor may be provided in a vehicle on which a battery assembly 10 is mounted or in a fluid supply system connected to the battery assembly 10.

A vehicle on which a battery assembly 10 is mounted or a fluid supply system connected to the battery assembly 10 may include a pump 410 or a moto or the like.

Therefore, components such as the pump 410 or motor may be components attached to a battery assembly or may be components included in a vehicle or fluid supply system.

A pump 410 serves to supply a fluid to an insertion member 300, and may be provided between a fuel tank and the insertion member 300 on a pipe extending from the fuel tank. A plurality of pumps 410 are provided according to the arrangement relationship between the pumps 410 and a branch point, and the position of an insertion member 300 to which a fluid is supplied may vary depending on the operation of the pumps 410.

A valve 420 may be positioned on a pipe connecting an insertion member 300 and a pump 410 to open and close the pipe. A valve 420 is provided inside or outside a cover member 200, and so its position is not limited. A plurality of valves 420 may be provided according to the arrangement relationship with a branch point of a pipe, so that a single valve 420 may correspond to one insertion member 300, or a single valve 420 may correspond to a plurality of insertion members 300.

A temperature sensor 510 may be positioned inside a cover member 200 and may measure the temperature of a plurality of battery cells 100, and may transmit the measured temperature of the battery cells 100 to a pump 410 or a control portion (as shown).

Measuring the temperature of a battery cell 100 through a temperature sensor 510 includes the temperature sensor 510 detecting the ambient temperature.

A gas sensor 520 may be positioned inside a cover member 200 and may sense a gas inside the cover member 200, and may provide information on whether the gas is measured to a valve 420 or transmit it to a control portion.

When a control portion is included in the present disclosure, a pump 410 and a valve 420 may be controlled by combining the measure temperature of the battery cell 100 and the information on whether a gas is measured.

However, a pump 410 may be operated based on whether the temperature measured through a temperature sensor 510 is higher than or equal to a preset allowable temperature, and a valve 420 may be opened and closed based on whether a gas is detected inside a cover member 200 through a gas sensor 520, and so a unit portion may be omitted in the present disclosure.

A fluid may be supplied to an insertion member 300 when specific conditions are satisfied, and the specific conditions may reflect measurement values of a temperature sensor 510 and a gas sensor 520, as described below.

A temperature sensor 510 may measure the temperature of a plurality of battery cells 100 at regular time intervals regardless of the operation of a battery.

Based on whether the temperature of a battery cell 100 measured by a temperature sensor 510 is higher than or equal to a preset allowable temperature, a pump 410 may begin to operate when the measured temperature of the battery cell 100 is higher than or equal to the allowable temperature, and when the temperature is lower than the allowable temperature, the pump may not operate and the temperature measurement of the battery cell may be repeated.

When the temperature of a battery cell 100 measured by a temperature sensor 510 is higher than or equal to an allowable temperature, a fluid may be moved toward an insertion member 300 through a pump 410.

That the temperature of a battery cell 100 is higher than or equal to an allowable temperature indicates a state where a lot of heat is being generated in the battery cell 100, and a pump 410 may begin to operate so that a fluid is immediately supplied when necessary, but since the valve 420 is closed, a fluid may not immediately supplied to an insertion member 300.

When a temperature of the battery cell 100 measured by a temperature sensor 510 is higher than or equal to an allowable temperature, gas sensing inside a cover member 200 may begin through a gas sensor 520 or whether a gas is sensed may be determined.

A valve 420 may be opened and closed based on whether a gas inside a cover member 200 is detected through a gas sensor 520, and when a gas is detected, the valve may be opened to spray a fluid toward a plurality of battery cells 100 through a pipe.

When a gas sensor 520 senses a gas inside a cover member 200, a valve 420 is opened, and when a gas inside the cover member 200 is not sensed, the valve 420 is not opened but remains closed, and a fluid may not be supplied to an insertion member 300.

A fluid may be supplied through an inlet 320 of an insertion member 300 only when the temperature of a battery cell 100 measured by a temperature sensor 510 is higher than or equal to an allowable temperature and a gas inside a cover member 200 is sensed by a gas sensor 520.

When a gas sensor 520 does not sense a gas inside a cover member 200, a valve 420 remains closed, and the measurement of the temperature of a battery cell 100 through a temperature sensor 510 may be repeated

An allowable temperature for sensing thermal runaway of a battery cell 100 may be approximately 120 °C (degrees Celsius), and a gas detected through the gas sensor 520 may include any one of hydrogen, carbon monoxide, and carbon dioxide, or a combination thereof, but is not limited thereto.

Referring to FIG. 11, a temperature sensor 510 is provided in each of a plurality of battery cells 100 so that the temperature of each battery cell 100 may be measured individually.

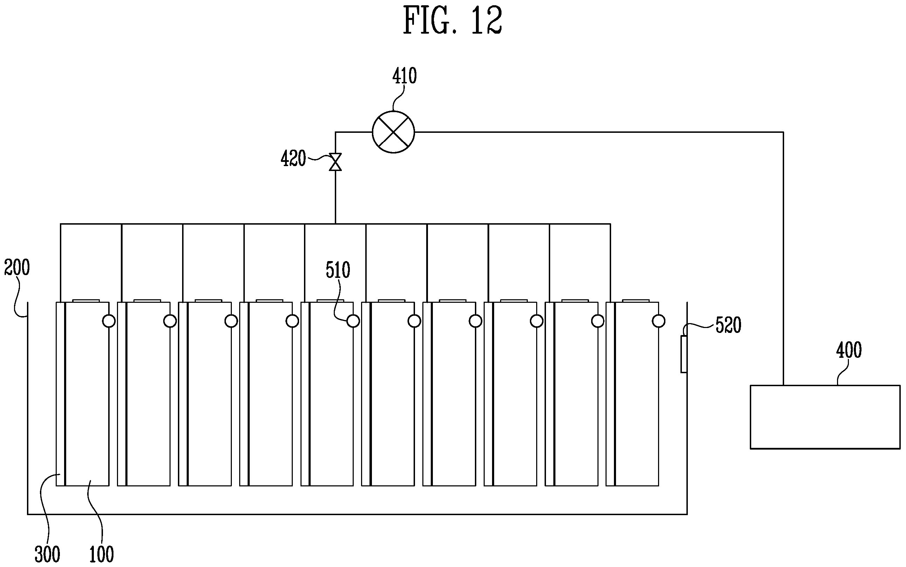

FIG. 12 shows a battery assembly and a fluid supply system according to another embodiment of the present disclosure.

Referring to FIG. 12, a temperature sensor 510 is provided in each of a plurality of battery cells 100, but the present disclosure is not limited to the number of temperature sensors 510 provided inside a cover member 200.

The temperature sensor 510 may be provided in a plural member to be disposed to each of the plurality of battery cells 100, and the pump 410 may move the fluid toward the insertion member 300 when the temperature measured by at least one temperature sensor 510 among the plurality of temperature sensors 510 is higher than or equal to the predetermined allowable temperature.

As shown in FIG. 12, when a temperature sensor 510 is provided in each of a plurality of battery cells 100, a pump 410 may operate to supply a fluid when the temperature measured by at least one temperature sensor 510 among the temperatures measured by a plurality of temperature sensors 510 is higher than or equal to a preset allowable temperature.

A valve 420 provided on a pipe may be provided between an insertion member 300 and the branch point, as shown in FIG. 11, to selectively supply a fluid to a battery cell 100 where the temperature measured by a temperature sensor 510 is higher than or equal to a preset allowable temperature.

A valve 420 provided on a pipe may provided between a branch point and a pump 410, as shown in FIG. 12, to supply a fluid to all insertion members 300 disposed inside a cover member 200 when the temperature measured by a temperature sensor 510 is higher than or equal to a preset allowable temperature.

The inside of the cover member 200 may be partitioned into a plurality of spaces, and temperature sensors 510 may be disposed to correspond to the plurality of spaces so that the fluid is moved toward the insertion member 300 through the pump 410 when the temperature measured by a temperature sensor 510 disposed in one space among the plurality of spaces is higher than or equal to the predetermined allowable temperature.

As another embodiment of the present disclosure, the inside of a cover member 200 may be partitioned into a plurality of spaces through a virtual surface, and a temperature sensor 510 and a gas sensor 520 are disposed to correspond to the plurality of partitioned spaces, so that whether a fluid is supplied may vary depending on each of the spaces.

The number of battery cells 100 included in each space may be different, including cases where a single battery cell 100 and an insertion member 300 are provided in one space.

The valve 420 may be provided in a plural number between the pump 410 and the plurality of insertion members 300 so that the fluid is selectively supplied to the plurality of insertion members.

The valve 420 may be disposed to correspond to the plurality of spaces so that the fluid is independently supplied to the plurality of spaces through opening and closing.

The valve 420 is also arranged to correspond to a plurality of spaces to supply a fluid to a plurality of space units through opening and closing, and when the temperature measured by a temperature sensor 510 disposed in one space among the plurality of spaces is higher than or equal to a preset allowable temperature, the pump 410 operates to supply a fluid to an insertion member 300.

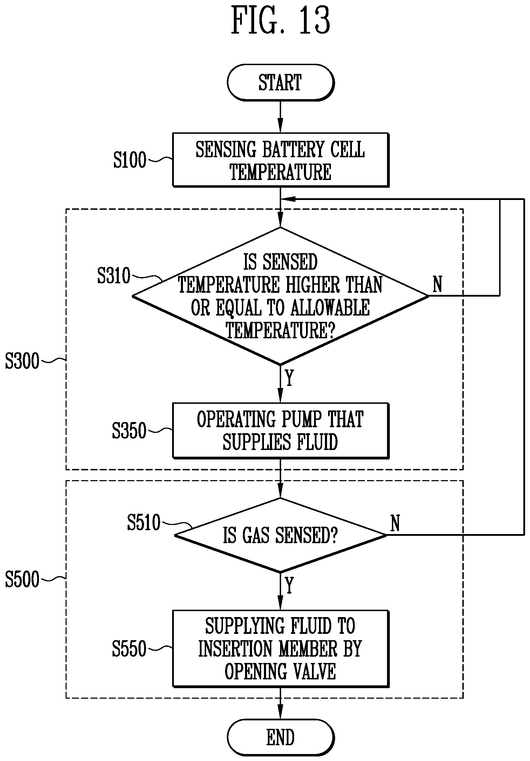

FIG. 13 show a flowchart illustrating a controlling method of a battery assembly 10 according to one embodiment of the present disclosure.

FIG. 13 shows a controlling method of a battery assembly 10 including: a plurality of battery cells 100 stacked along a preset stacking direction; an insertion member 300 positioned between the plurality of battery cells 100; an inlet 320 formed on one side of the insertion member 300; and a cover member 200 covering the plurality of battery cells 100 and the insertion member 300.

The controlling method of a battery assembly 10 according to one embodiment of the present disclosure may be a controlling method of a battery assembly 10 including battery cells 100; an insertion member 300 positioned adjacently to the battery cells 100; an inlet 320 formed on one side of the insertion member 300; and a cover member 200 covering the battery cells 100 and the insertion member 300, the controlling method including: sensing the temperature of the battery cells 100 through a temperature sensor 510 positioned inside the cover member 200; moving a fluid toward the insertion member 300 through a pump 410 supplying a fluid to the insertion member 300 when the temperature sensed through the temperature sensor 510 is higher than or equal to an allowable temperature; sensing a gas through a gas sensor 520 positioned inside the cover member 200; and opening a valve 420 positioned on a pipe connecting the insertion member 300 and the pump 410 and spraying the fluid toward the battery cells 100 when the gas sensor 520 senses the gas.

The controlling method of a battery assembly 10 begins in a starting step, and the starting step may be performed regardless of the operation of the battery assembly 10.

After the starting step, a step S100 of detecting the temperature of a plurality of battery cells 100 through a temperature sensor 510 positioned inside a cover member 200 may be performed, and a step S310 of determining whether the temperature measured through the temperature sensor 510 is higher than or equal to a present allowable temperature may be performed.

When the measured temperature is higher than or equal to the allowable temperature, a step S350 of moving a fluid toward an insertion member 300 through a pump 410 that supplies a fluid to the insertion member 300 is performed, and the pump 410 is operated to supply the fluid but a valve 420 between the pump 410 and the insertion member 300 is closed, so that the fluid may not be supplied to the insertion member 300.

Thereafter, a step S510 of sensing a gas through a gas sensor 520 positioned inside the cover member 200 is performed, so that gas leakage from a battery cell 100 inside the cover member 200 may be sensed.

When a gas sensor 520 senses a gas, a step S550 of spraying a fluid toward a battery cell 100 by opening the valve 420 positioned on a pipe connecting the insertion member 300 and the pump 410 is performed, and the fluid may be supplied to the insertion member 300 through the pipe and the valve 420, completing the final step.

Through the temperature measured through a temperature sensor 510 and a gas sensed through a gas sensor 520, thermal runaway of a battery cell is confirmed, and an insertion member 300 receives a fluid and absorbs the heat from the battery cell 100 undergoing thermal runaway, thereby delaying thermal runaway or preventing a fire.

The controlling method may further include: when the temperature measured through the temperature sensor 510 is lower than a predetermined allowable temperature, measuring the temperature of the battery cells 100 again through the temperature sensor 510 after a certain time.

The controlling method may further include: when the gas sensor 520 fails to sense the gas, measuring the temperature of the battery cells 100 again through the temperature sensor 510.

When the temperature measured by a temperature sensor 510 is lower than an allowable temperature, a step of measuring the temperature of a plurality of battery cells 100 again through a temperature sensor 510 is repeated after a certain period of time, and when a gas sensor 520 does not sense a gas, a step of measuring the temperature of a plurality of battery cells 100 again through a temperature sensor 510 may be repeated.

In the step S510 of sensing a gas through a gas sensor 520 positioned inside the cover member 200, the gas may include any one of hydrogen, carbon monoxide, and carbon dioxide or a combination thereof.

An insertion member 300 may receive a fluid by the operation of a pump 410 and the opening of a valve 420 to expand only when a battery cell 100 exceeds the allowable temperature of 120 °C (degrees Celsius) and any one gas of hydrogen, carbon monoxide, and carbon dioxide or a combination thereof is sensed inside a cover member 200.

Additionally, after the step S550 of opening the valve 420, the method may include a step where a fluid is brought to contact with at least a part of battery cells 100 among a plurality of battery cells 100 through an insertion member 300 a part of which is melted by a battery cell 100.

A part of an insertion member 300 may be melted by the heat of a battery cell 100, and a fluid temporarily stored therein may be discharged or move to the battery cell 100, thereby lowering the temperature of the battery cell 100 through direct contact.

A controlling method of a battery assembly 10 may be largely divided into a starting step, a step S100 of measuring the temperature of a battery cell 100, a step S300 performed based on the measured temperature of a battery cell 100, and a step S500 performed based whether a gas is sensed.

The step S300 performed based on the measured temperature of a battery cell 100 may include a step S310 of determining whether the temperature measured through a temperature sensor 510 is higher than or equal to a preset allowable temperature and a step S350 of moving a fluid toward an insertion member 300 through a pump 410 that supplies the fluid to the insertion member 300 when the measured temperature is higher than or equal to the allowable temperature.

The step S500 performed based whether a gas is sensed may include a step S510 of sensing a gas through a gas sensor 520 positioned inside a cover member 200 and a step S550 of spraying a fluid toward a battery cell 100 by opening a valve 420 positioned on a pipe connecting an insertion member 300 and a pump 410 when the gas sensor 520 senses a gas.

The present disclosure is not limited to the embodiments described above, and may include a combination of the above embodiments or a combination of at least one of the above embodiments and a known art as another embodiment.

Although the present disclosure has been described in detail through specific examples, this is for the purpose of specifically explaining the present disclosure, and the present disclosure is not limited thereto, and it is obvious that modifications and improvements are possible by those skilled in the art within the technical spirit of the present disclosure.

All simple modifications or changes to the present disclosure fall within the scope of the present disclosure, and the specific scope of protection of the present disclosure will be made clear by the appended claims.

## Claims

1. A battery assembly comprising:
a plurality of battery cells;
an insertion member positioned between the plurality of battery cells;
an inlet formed on one side of the insertion member; and
a cover member covering the plurality of battery cells and the insertion member,
wherein the insertion member is expanded when a fluid is injected to the inside of the insertion member through the inlet.

2. The battery assembly of claim 1, wherein the insertion member includes:
an accommodating space, which is a space for accommodating the fluid therein;
a first surface forming one surface of the accommodating space and contacting with any one battery cell among the plurality of battery cells; and
a second surface that forms another surface of the accommodating space facing the first surface, spaced apart from another battery cell adjacent to the any one battery cell, and is contactable with the adjacent another battery cell when the insertion member is expanded.

3. The battery assembly of claims 1 or 2, wherein the insertion member further includes an insulation layer facing the second surface in contact with the second surface, preferably wherein the insulation layer is laminated on the second surface.

4. The battery assembly of any one of claims 1 to 3, wherein the fluid, when injected through the inlet, moves the second surface toward the adjacent another battery cell to expand the insertion member.

5. The battery assembly of any one of claims 1 to 4, further comprising:
a pump supplying the fluid to the insertion member; and
a temperature sensor positioned inside the cover member and sensing the temperature of the plurality of battery cells,
wherein the pump moves the fluid toward the insertion member, based on whether the temperature measured through the temperature sensor is higher than or equal to a predetermined allowable temperature.

6. The battery assembly of any one of claims 1 to 5, further comprising:
a valve positioned on a pipe connecting the insertion member and the pump to open and close the pipe; and
a gas sensor positioned inside the cover member and detecting a gas inside the cover member,
wherein the valve is opened and sprays the fluid toward the plurality of battery cells through the pipe, based on whether a gas is detected inside the cover member through the gas sensor.

7. The battery assembly of any one of claims 1 to 6, wherein the fluid includes a cooling material, and/or
wherein the gas includes any one of hydrogen, carbon monoxide, and carbon dioxide or a combination thereof.

8. The battery assembly of any one of claims 1 to 7, wherein the insertion member is provided in a plural number, and the number of the plurality of insertion members is less than or equal to the number of the plurality of battery cells.

9. The battery assembly of any one of claims 1 to 5, wherein the accommodating space begins to be melted above the allowable temperature so that the fluid is brought to contract with at least a part of the plurality of battery cells.

10. The battery assembly of any one of claims 1 to 5, wherein the temperature sensor is provided in a plural member to be disposed to each of the plurality of battery cells, and the pump moves the fluid toward the insertion member when the temperature measured by at least one temperature sensor among the plurality of temperature sensors is higher than or equal to the predetermined allowable temperature.

11. The battery assembly of any one of claims 1 to 6, wherein the valve is provided in a plural number between the pump and the plurality of insertion members so that the fluid is selectively supplied to the plurality of insertion members.

12. The battery assembly of any one of claims 1 to 6, wherein the inside of the cover member is partitioned into a plurality of spaces, and temperature sensors are disposed to correspond to the plurality of spaces so that the fluid is moved toward the insertion member through the pump when the temperature measured by a temperature sensor disposed in one space among the plurality of spaces is higher than or equal to the predetermined allowable temperature, wherein the valve is disposed to correspond to the plurality of spaces so that the fluid is independently supplied to the plurality of spaces through opening and closing.

13. A controlling method of a battery assembly including battery cells; an insertion member positioned adjacently to the battery cells; an inlet formed on one side of the insertion member; and a cover member covering the battery cells and the insertion member, the controlling method comprising:
sensing the temperature of the battery cells through a temperature sensor positioned inside the cover member;
moving a fluid toward the insertion member through a pump supplying a fluid to the insertion member when the temperature sensed through the temperature sensor is higher than or equal to an allowable temperature;
sensing a gas through a gas sensor positioned inside the cover member; and
opening a valve positioned on a pipe connecting the insertion member and the pump and spraying the fluid toward the battery cells when the gas sensor senses the gas.

14. The controlling method of claim 13, further comprising:
when the temperature measured through the temperature sensor is lower than a predetermined allowable temperature, measuring the temperature of the battery cells again through the temperature sensor after a certain time, and/or
when the gas sensor fails to sense the gas, measuring the temperature of the battery cells again through the temperature sensor, and/or
after opening the valve, bringing the fluid to contact with battery cells other than the battery cell through the insertion member partially melted by the battery cell.

15. The controlling method of claims 13 or 14, wherein in the operation of sensing a gas through a gas sensor positioned inside the cover member, the gas includes any one of hydrogen, carbon monoxide, and carbon dioxide or a combination thereof.
